**Europäisches Patentamt**

**European Patent Office**

**Office européen des brevets**

(11) Numéro de publication: **0 239 462**
**B1**

## FASCICULE DE BREVET EUROPEEN

(45) Date de publication du fascicule du brevet:
**22.08.90**

(51) Int. Cl.⁵: **F23C 7/00**, F23R 3/26

(21) Numéro de dépôt: 87400532.5

(22) Date de dépôt: **11.03.87**

(54) Dispositif d'injection à vrille axialo centripète.

(30) Priorité: 20.03.86 FR 8603971

(43) Date de publication de la demande:
30.09.87 Bulletin 87/40

(45) Mention de la délivrance du brevet:
22.08.90 Bulletin 90/34

(84) Etats contractants désignés:
DE FR GB

(56) Documents cités:
CH-A- 323 713
DE-A- 2 936 073
DE-B- 1 039 785
DE-C- 386 159
FR-A- 2 522 393
FR-A- 2 572 463
US-A- 3 853 273

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: Barbier, Gérard Yves Georges, 1, rue Louis
Blériot, F-91420 Morangis(FR)
Inventeur: Bayle-Labourne, Gérard Joseph Pascal, 7, bis
rue Rémy Dumoncel, F-77210 Avon(FR)
Inventeur: Desaulty, Michel André Albert, 2, rue de la
Pierre Décollée, F-77240 Vert Saint Denis(FR)
Inventeur: Martinez, Rodolphe, 14, Chemin de l'Osier,
F-94520 Perigny S/Yerres(FR)
Inventeur: Perigne, Jerome, 1, Allee des Tilleuls,
77000 Vaux Le Penils(FR)

(74) Mandataire: Moinat, François, S.N.E.C.M.A. Service des
Brevets Boîte Postale 81, F-91003 Evry Cédex(FR)

ACTORUM AG

## Description

L'invention concerne l'alimentation en carburant et en air primaire d'une chambre de combustion, notamment pour turbomachine.

Dans ce domaine, on sait que le compromis entre les performances de la chambre de combustion aux pleins gaz (émission de fumées, tenue thermique des parois, répartition des températures) et les performances au ralenti (rendement, stabilité de flamme), est obtenu par le choix de la fraction d'air injecté dans la zone primaire aux différents régimes, d'une part au moyen de vrilles de turbulence et d'autre part au moyen d'orifices de fond de chambre et des parois internes et externes de la chambre de combustion.

Il est maintenant bien connu d'utiliser des chambres de combustion à deux modules, l'un optimisé pour le régime de ralenti, et l'autre pour le régime de pleins gaz, mais ces chambres présentent bien des inconvénients car, outre leur poids et leur encombrement, elles posent des problèmes de régulation aux régimes intermédiaires.

Pour éviter ces problèmes, on a proposé de réaliser des chambres de combustion, dites "à géométrie variable" dans lesquelles on cherche à adapter de façon continue la répartition du débit d'air en fonction du régime au moyen de volets mobiles aptes à diaphragmer plus ou moins les entrées d'air de la chambre pour obtenir une optimisation continue du fonctionnement de la chambre. Les brevets français 2 491 139 et 2 491 140 divulguent ainsi des diaphragmes adaptés, l'un à une vrille de turbulence externe radiale, l'autre à une vrille axiale d'un dispositif d'injection par ailleurs traditionnel, mais ces dispositifs ont pour inconvénients un mauvais guidage de l'air à l'entrée des vrilles ainsi que la génération de sillages importants à l'intérieur de la chambre de combustion.

On a d'autre part développé des injecteurs aérodynamiques à bols intermédiaires tels que ceux décrits dans les brevets antérieurs de la demanderesse FR 2 357 738 et FR 2 391 359. Dans ces dispositifs on interpose entre l'injecteur et le fond de chambre un bol comportant une partie tronconique évasée vers l'aval et percée d'une multiplicité de trous de faible diamètre par lesquels de l'air à forte pression pénètre dans le cône de carburant pulvérisé. Par le mélange intime qu'il réalise, ce bol complète le rôle de l'injecteur, agit sur la composition du mélange et permet la création d'une mini-zone primaire au ralenti.

Le document FR-A 2 572 463 décrit une amélioration de ces injecteurs aérodynamiques à bol intermédiaire réalisée en dotant leur vrille de turbulence externe ainsi que l'admission d'air des trous de bol d'un diaphragme permettant d'en moduler le débit de sortie pour adapter la richesse du mélange air-carburant en sortie de bol à toutes les conditions de fonctionnement de la chambre de combustion et ainsi adapter cette richesse à tous les régimes intermédiaires entre le ralenti et le plein gaz.

La présente invention vient perfectionner ce type d'injecteurs aérodynamiques à bol intermédiaire et à diaphragme de modulation de débit d'air, en remplaçant la vrille de turbulence externe radiale par une vrille composée, à la fois radiale et axiale qui a pour premier but de réaliser une vrille externe d'encombrement plus faible qu'une vrille simplement radiale pour laquelle le diamètre externe est imposé par la nécessité de disposer un diaphragme permettant une fermeture pratiquement totale dans les conditions de ralenti.

Un autre but de la présente invention est de pouvoir faire varier la composante tourbillonnaire de l'air issu du système d'injection en fonction du régime pour adapter au mieux la répartition volumétrique du mélange air-carburant dans la zone de réaction et de ce fait améliorer la stabilité de flamme au ralenti par une augmentation de la composante tangentielle du flux d'air au ralenti, ainsi que le rendement de combustion au plein gaz par une diminution de la composante tangentielle et une augmentation simultanée de la composante axiale au plein gaz en réalisant une modulation continue de ces paramètres tout au long de la plage de fonctionnement de la chambre de combustion.

L'invention concerne donc un dispositif d'injection d'air et de carburant dans une chambre de combustion, notamment de turbomachine, du genre comprenant au moins un injecteur de carburant, une vrille de turbulence pour le passage d'air de pulvérisation du carburant, un corps en forme de bol comportant un voile aval divergent dans le sens de l'écoulement et pourvu de trous de bol pour l'injection d'air dans le cône de carburant pulvérisé et une chambre de refroidissement par impact possédant des orifices d'entrée d'air.

Selon l'objet de l'invention, la vrille possède un nombre pair d'ailettes délimitant un nombre égal de passages d'entrée d'air et suivant une caractéristique importante, un premier passage sur deux est à entrée axiale tandis que d'autres seconds passages intercalés avec les premiers sont à entrée radiale, la sortie d'air vers l'aval des premiers et des seconds passages de la vrille étant axialo-centripète.

Le diaphragme de modulation du débit d'entrée d'air dans la vrille, entre les régimes ralenti et plein gaz, dont est équipé le dispositif selon l'invention, est constitué par une bague rotative emboîtée sur une portée cylindrique externe de la vrille et comporte d'une part une première partie circulaire plane possédant des premières ouvertures et des premiers obstacles aptes à permettre ou interdire le passage d'air dans les premiers passages à entrée axiale des secondes ouvertures et des seconds obstacles aptes à permettre ou interdire le passage d'air dans les seconds passages à entrée radiale.

Selon un premier mode d'exécution de l'invention, chaque ailette de la vrille de turbulence possède une double inclinaison, d'une part d'un premier angle $\alpha$ par rapport à la génératrice du cylindre enveloppant la vrille et d'autre part d'un second angle $\beta$ par rapport à un plan longitudinal diamétral de la vrille.

Selon un second mode d'exécution, les faces des ailettes de la vrille adjacentes aux premiers passages à entrée axiale sont inclinées d'un angle $\alpha$ par rapport à la génératrice du cylindre enveloppant la vrille tandis que les faces opposées des ailettes, adjacentes aux seconds passages à entrée radiale, sont inclinées d'un angle β par rapport à un plan longitudinal diamétral de la vrille.

Dans une application du dispositif selon l'invention, utilisé en combinaison avec un injecteur central simplifié de carburant, du type à rotule et à orifices ponctuels d'injection du carburant, ou du type à embase refroidie et orifice d'injection annulaire, les premiers passages axiaux constituent une vrille externe pour le dispositif d'injection tandis que les deuxièmes passages radiaux débouchent dans le fourreau central dans lequel est disposé l'injecteur central, pour constituer la vrille de turbulence interne du dispositif d'injection.

D'autres caractéristiques de l'invention ainsi que des variantes de réalisation seront explicitées dans le complément de description suivant et en regard des dessins annexés parmi lesquels :

- la figure 1 montre, vu en coupe axiale, un premier mode de réalisation de l'invention et la figure 1a en montre partiellement le montage en perspective à plus grande échelle.

- la figure 2 est une vue en coupe selon II-II de la figure 1 de la vrille de turbulence équipée de son diaphragme.

- la figure 3 montre le fourreau dans lequel vient se loger l'injecteur, vu de l'amont.

- les figures 4 à 6 montrent une première variante d'exécution de la vrille selon l'invention.

- la figure 7 montre une seconde variante d'exécution de la vrille.

- la figure 8 montre en coupe IV-IV de la figure 1 une première variante de diaphragme à obstacles déphasés pour une ouverture (respectivement fermeture) simultanée de la partie radiale et de la partie axiale de la vrille.

- les figures 9a, 9b et 9c montrent, vues de l'amont, les positions respectives du diaphragme et de la vrille au ralenti (figure 9a), à un régime intermédiaire (figure 9b) et au plein gaz (figure 9c), pour la première variante du diaphragme.

- la figure 10 montre une seconde variante de diaphragme en coupe IV-IV de la figure 1, à obstacles en phases permettant l'ouverture de la partie radiale de la vrille simultanément à la fermeture de la partie axiale.

- les figures 11a, 11b et 11c représentent des vues similaires à celles des figures 9a, 9b et 9c, appliquées à la seconde variante de diaphragme de la figure 10.

- la figure 12 est une vue en coupe axiale d'un second mode de réalisation du dispositif d'injection selon l'invention, à encombrement réduit et à collerette diaphragmant les orifices d'impact du bol.

- la figure 13 est une coupe selon V-V de la figure 12.

- la figure 14 est une vue du fourreau appliqué au second mode de réalisation selon la figure 12.

- les figures 15 et 16 montrent en coupe VI-VI de la figure 12 deux variantes de diaphragmes, pour le deuxième mode de réalisation de la figure 12, l'un (figure 15) à obstacles déphasés et l'autre (figure 16) à obstacles en phase.

- la figure 17 montre l'application du principe de vrille selon l'invention à un injecteur central de carburant simplifé à embase refroidie et orifice d'injection annulaire où la partie radiale de la vrille débouche dans l'injecteur central pour former une vrille interne.

- la figure 18 montre une application du même type qu'à la figure 17, à un injecteur simplifié de carburant du genre à rotule et à orifices ponctuels d'injection.

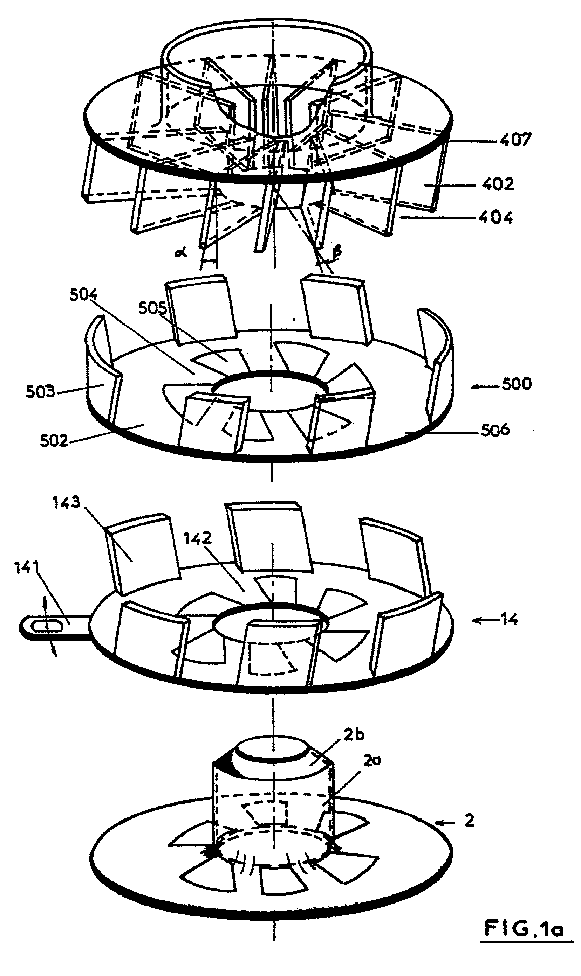

Selon ce qui a été dit précédemment et en référence aux figures 1 à 7, l'invention s'applique à un dispositif d'injection d'air et de carburant pour chambre de combustion de turbomachine dans lequel un injecteur central de carburant globalement référencé 1 est disposé à l'intérieur d'un fourreau central 2 comportant une portée cylindrique 2a et terminé en aval par une partie tronconique 2b, le fourreau 2 constituant la partie centrale du bol intermédiaire 3 formé également d'une partie cylindrique 3a coaxiale et extérieure au fourreau prolongée par une portée tronconique resserrée vers l'aval 3b et se terminant par une seconde portée tronconique 3c évasée vers l'aval formant la paroi du bol proprement dit. Les portées 2a, 2b, 3a, 3b forment un canal axialo-centripète de sortie d'air pour la vrille externe 4 formant pour partie l'objet de l'invention, qui sera décrite en détail plus loin.

Le bol ainsi défini vient en appui, par un prolongement radial 3d du voile 3c, contre une coupelle 5 solidaire du fond de la chambre de combustion 6, et il est fixé sur le fond de chambre par un écrou 7 vissé sur une portée cylindrique externe 8 solidaire du voile aval 3c et formant avec les parties 3a, 3b, 3c une chambre 9 alimentée par des orifices 9a pour le refroidissement par impact d'air du voile aval 3c lui-même percé d'orifices 10 au travers desquels l'air de refroidissement s'échappe, assurant ainsi une fonction supplémentaire de pulvérisation pour le carburant issu de l'injecteur 1 et s'écoulant en nappe conique le long de la paroi 3c du bol.

La vrille 4 est constituée d'un nombre pair (par exemple douze dans le mode de réalisation décrit ici) d'ailettes 11 déterminant entre elles un nombre égal de passages, des premiers passages 12 étant à entrée axiale tandis que des seconds passages 13 intercalés avec les premiers sont à entrée radiale et que la sorte de tous les passages d'air de la vrille 4 s'effectue de façon axialo-centripète entre le fourreau central 2a, 2b et la paroi interne 3a, 3b du bol 3.

Pour permettre une déviation angulaire à composante tangentielle importante du jet d'air traversant la vrille 4 et ce, tant pour les passages à entrée radiale que pour ceux à entrée axiale, on doit donner à la vrille un double calage angulaire. Ceci peut être réalisé selon deux variantes d'exécution du bloc axialo-centripète comportant la vrille 4.

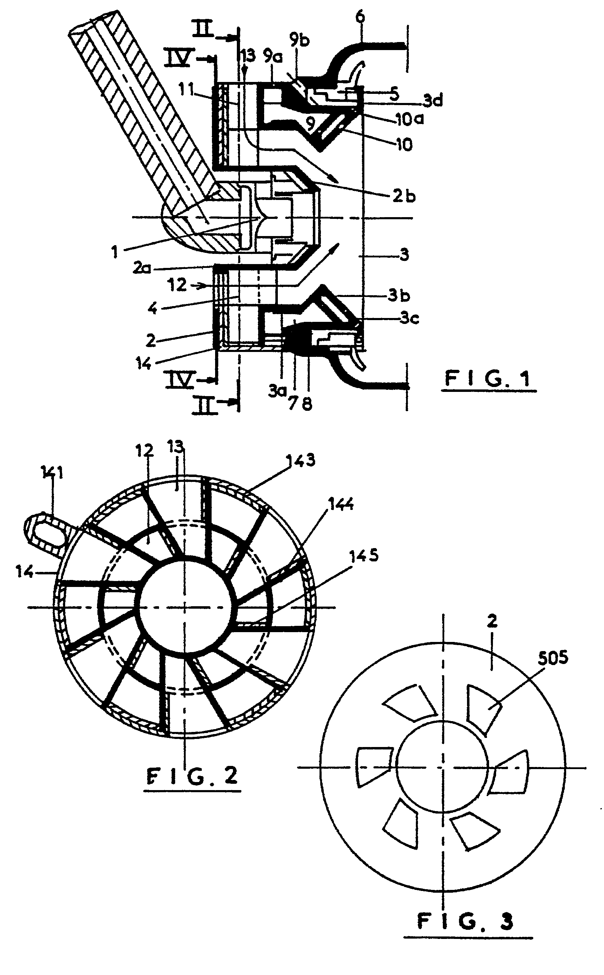

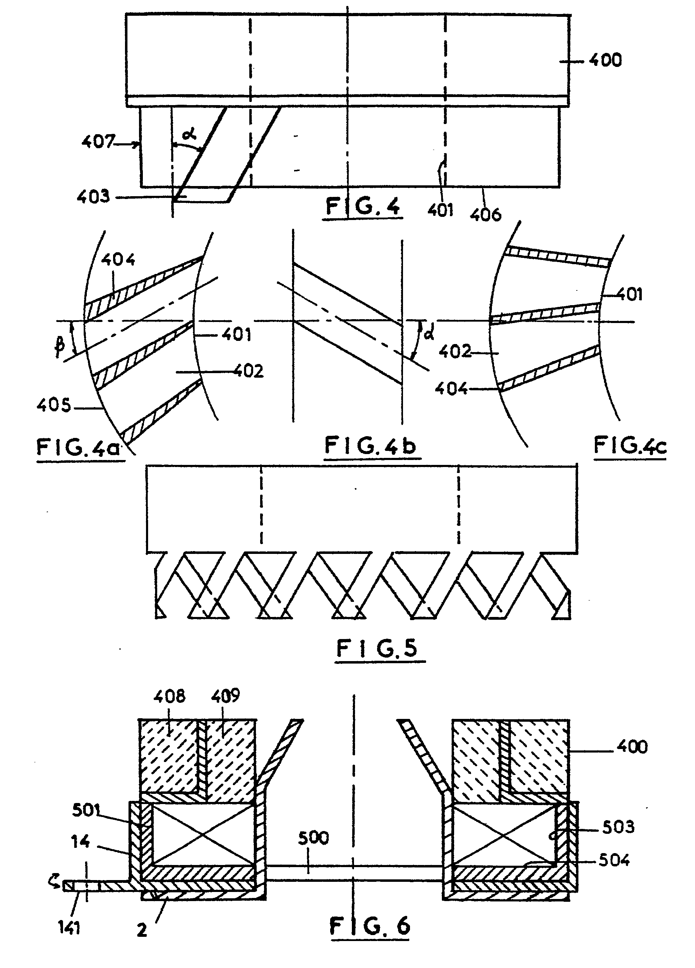

Dans la première variante montrée aux figures 4 à 6, pour réaliser la vrille axialo-centripète selon l'invention, on part (figure 4) d'une ébauche cylindrique 400 possédant un alésage axial 401 et on usine par électro-érosion dans la moitié inférieure (sur la figure 4) de l'ébauche 400, douze cavités 402 au moyen d'une électrode soit parallélépipédique (figures 4 et 4a) réalisant des passages à faces parallèles et de ce fait des ailettes amincies vers l'intérieur, soit de préférence à section trapézoïdale afin que la section des entrées inter-vrilles ait une valeur maximale (figure 4c).

L'électrode 403 est déplacée de façon sensiblement radiale mais avec une double inclinaison par rapport à l'ébauche 400, d'une part d'un premier angle α par rapport à la génératrice du cylindre enveloppant l'ébauche, d'autre part d'un second angle β par rapport à un plan longitudinal diamétral de l'ébauche 400. De ce fait, chacune des ailettes 404 possède la double inclinaison selon les anges α et β, l'inclinaison α donnant une composante tangentielle au jet d'air traversant les premiers passages à entrée axiale tandis que l'inclinaison β donnera une composante tangentielle au jet traversant les seconds passages à entrée radiale.

Les cavités 402 ainsi réalisées dans l'ébauche 400 débouchent d'une part à la fois sur les deux faces cylindriques latérales interne 401 et externe 405 de l'ébauche, d'autre part sur sa face frontale 406.

A l'issue de cette première opération, l'ébauche 400 a la forme représentée à la figure 5.

La seconde opération consiste à emboîter sur la moitié inférieure de l'ébauche 400 un couvercle 500 (figures 6 et 1a) dont la paroi latérale cylindrique 501 comporte six ouvertures régulièrement espacées 502, et alternées avec les ouvertures 502, six parties pleines 503 qui viennent masquer six des cavités 402 précédemment usinées dans l'ébauche 400. Le fond radial annulaire 504 du couvercle 500 comporte six découpes 505 séparées par six parties pleines 506, les découpes 505 étant situées sur la moitié interne de la partie annulaire 504 du couvercle et ayant leurs bords radiaux inclinés de l'angle β.

Les ouvertures 502 de la paroi radiale du couvercle 500 sont décalées d'un pas par rapport aux découpes 505 du fond radial 504 afin de réaliser, une fois le couvercle 500 assemblé sur l'ébauche 400 une double vrille alternée à entrées 12, 13 respectivement axiale et radiale. Le couvercle est brasé sur l'ébauche 400, de préférence dans un dégagement cylindrique 407, précédemment usiné au tour jusqu'à mi-hauteur du cylindre 400.

L'opération suivante consiste à dégager au tour les parties hachurées 408, 409 de l'ébauche 400 afin de réaliser la portée cylindrique 3a du canal annulaire d'éjection de la vrille et d'ouvrir vers ce canal les passages aval des cavités centripètes et axiales.

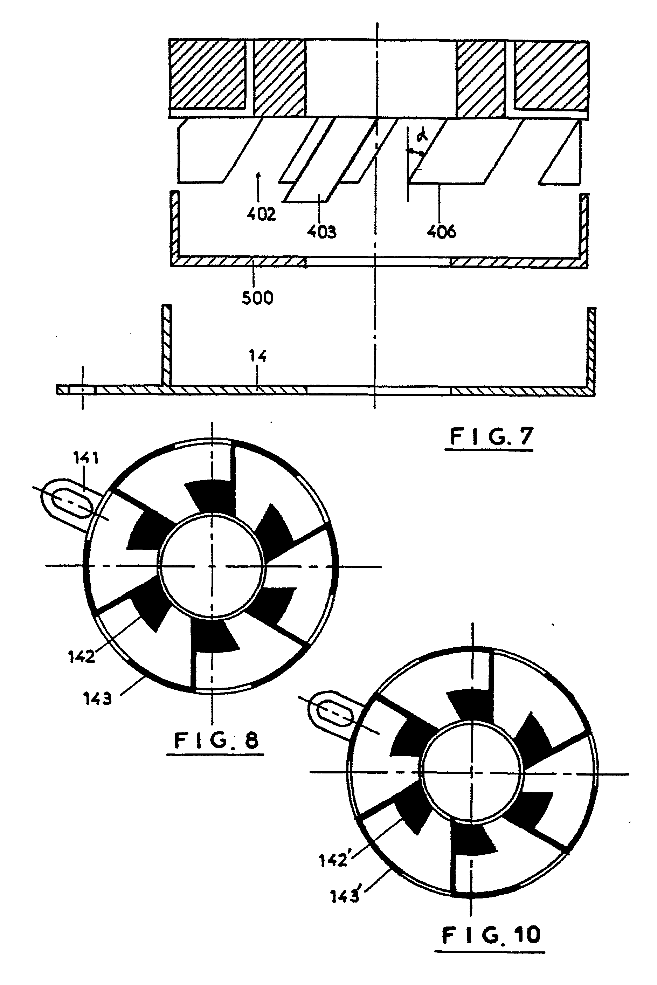

Selon une deuxième variante d'exécution (figure 7), on usine par électro-érosion six seulement des cavités 402, régulièrement réparties sur le pourtour de l'ébauche 400 au moyen d'une électrode parallélépipédique ou de section trapézoïdale à déplacement sensiblement radial décalé d'un angle β par rapport à un plan longitudinal diamétral de l'ébauche, qui conférera aux futurs passages radiaux une composante tangentielle.

On usine ensuite à l'aide d'une autre électrode par la face frontale 406 six passages axiaux dans les dents subsistant entre les passages radiaux centripètes, l'électrode étant disposée selon un angle α par rapport à la génératrice du cylindre enveloppant l'ébauche.

Ainsi les faces des ailettes de la vrille 4 adjacentes aux premiers passages à entrée axiale 12 sont inclinées de l'angle α tandis que les faces opposées de ces mêmes ailettes, adjacentes aux seconds passages à entrée radiale 13, sont inclinées de l'angle β, pour donner au débit d'air dans chacun des passages, une composante tangentielle.

Les opérations suivantes de pose du couvercle 400 et de dégagement par tournage sont identiques à celles de la première variante.

Les deux variantes décrites ci-dessus conduisent à l'obtention d'une double vrille 4 axialo-centripète possédant des passages axiaux 12 et radiaux 13 alternés qui ont chacun le calage approprié pour donner une composante tangentielle au débit les traversant.

Sur la vrille ainsi formée, est disposé un diaphragme 14 manoeuvrable en rotation par un levier 141 et comporte deux séries d'obstacles, les uns axiaux 142 et les autres radiaux 143 destinés à obturer respectivement les entrée axiales 12 et radiales 13 de la vrille.

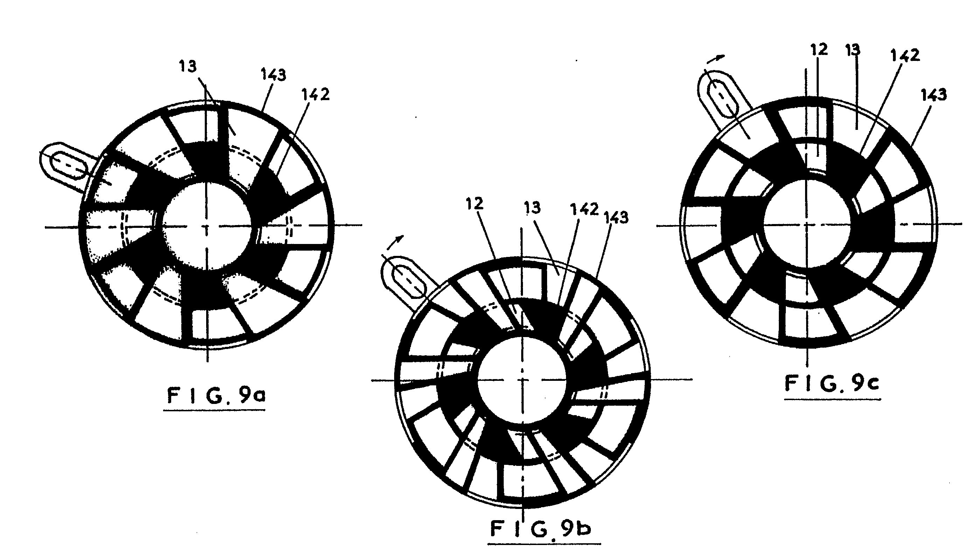

Dans une première variante du diaphragme, représentée à la figure 8, les obstacles 142 et 143 sont déphasés l'un par rapport à l'autre, de telle sorte que l'on puisse, au ralenti (figure 9a), fermer simultanément les vrilles axiale et radiale puis par une rotation continue du diaphragme 14, les ouvrir progressivement (figure 9b) jusqu'à ouverture complète simultanée au régime plein gaz (figure 9c). Une telle variante permet d'atteindre des conditions de fonctionnement sensiblement stoechiométriques du ralenti au plein gaz en réalisant une vrille externe d'encombrement plus faible que les vrilles antérieures simplement radiales dont le diamètre était imposé par la nécessité de disposer un diaphragme permettant une fermeture pratiquement totale dans les conditions de ralenti.

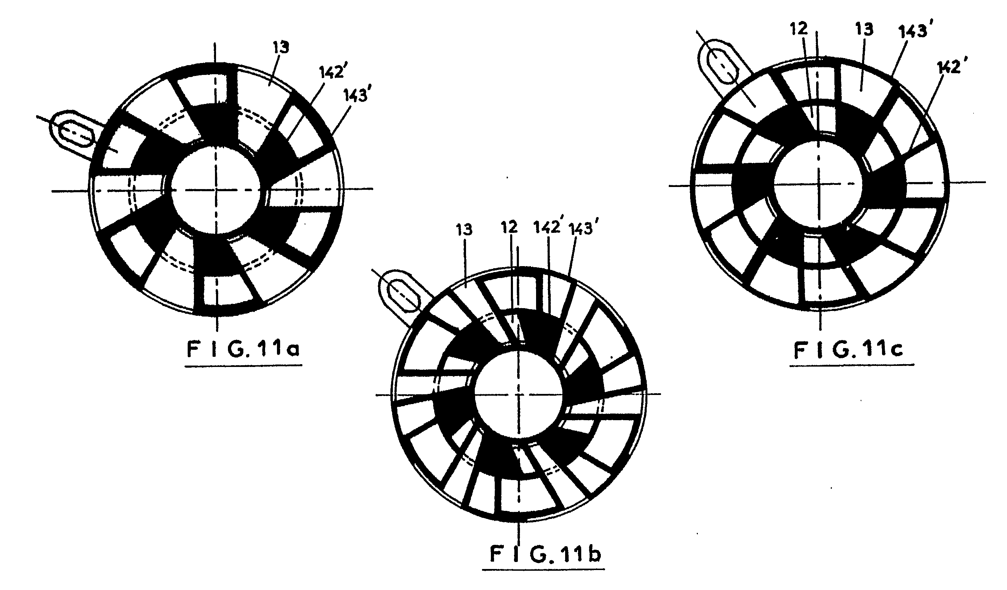

Dans la seconde variante de diaphragme, représentée aux figures 10 et 11a à 11c, les obstacles axiaux 142' et 143' sont disposés en phase l'une par rapport à l'autre, ce qui a pour conséquence que la rotation du diaphragme permet au ralenti (figure 11a) d'ouvrir la vrille radiale 13 tandis que la vrille axiale est fermée, ce qui adapte plus facilement le fonctionnement de la chambre de combustion aux conditions de ralenti en favorisant un cône d'air de turbulence externe évasé et par conséquent, un cône de carburant lui aussi évasé, ce qui augmente le temps de séjour du carburant dans la zone primaire au ralenti, et améliore la stabilité de fonctionnement.

Par rotation du diaphragme 14, on passe en continu (figure 11b) du ralenti au plein gaz où la vrille axiale, 12 est ouverte tandis que la vrille radiale 13 est fermée, ce qui favorise la composante axiale du débit d'air de turbulence créant ainsi un cône de carburant plus resserré dans la zone primaire de la chambre de combustion et améliorant de ce fait la carburation au plein gaz.

Dans les deux variantes de diaphragmes ci-dessus représentées, des languettes de guidage 144, 145 peuvent être disposées radialement sur le diaphragme mobile pour s'engager à l'intérieur des passages centripètes. Ces languettes sont normalement en appui sur les flancs des vrilles lorsque celles-ci sont ouvertes. Elles participent à leur obstruction lorsque le diaphragme mobile ferme les passages centripètes et, outre leur fonction de guidage de l'air, elles contribuent à éviter des pertes de charge trop brutales lorsque le diaphragme passe en position fermée.

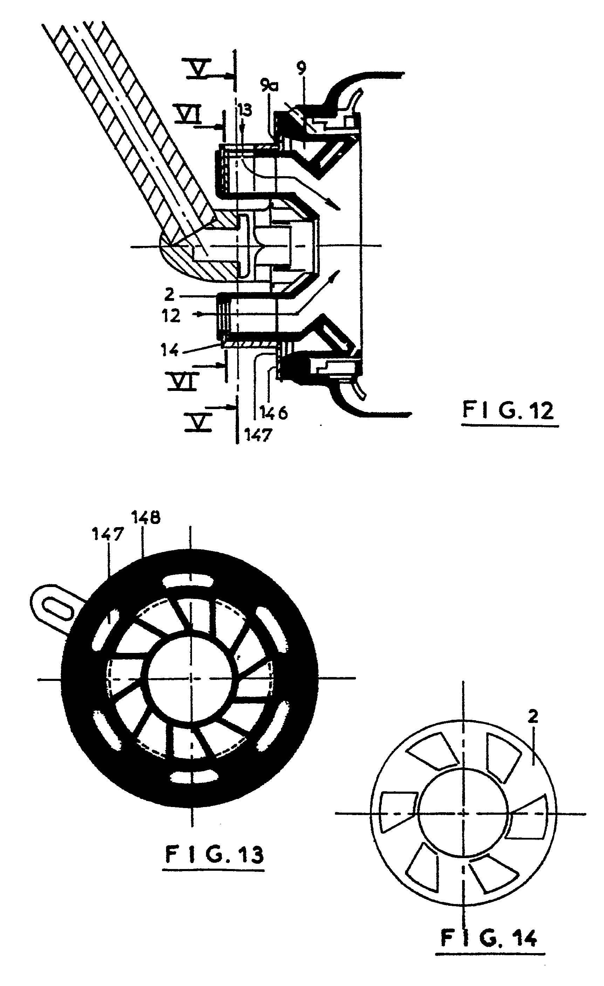

A la figure 12, est représentée une deuxième mode de réalisation de l'invention qui diffère du premier mode de réalisation de la figure 1, en ce que le diamètre externe du bloc axialo-centripète formant les vrilles 12 et 13 est réduit et en ce que le diaphragme 14 comporte une collerette radiale 146 comportant des orifices 147 séparés par des obstacles 148 permettant l'ouverture ou la fermeture des entrées d'air 9a de la chambre 9 de refroidissement par impact du bol.

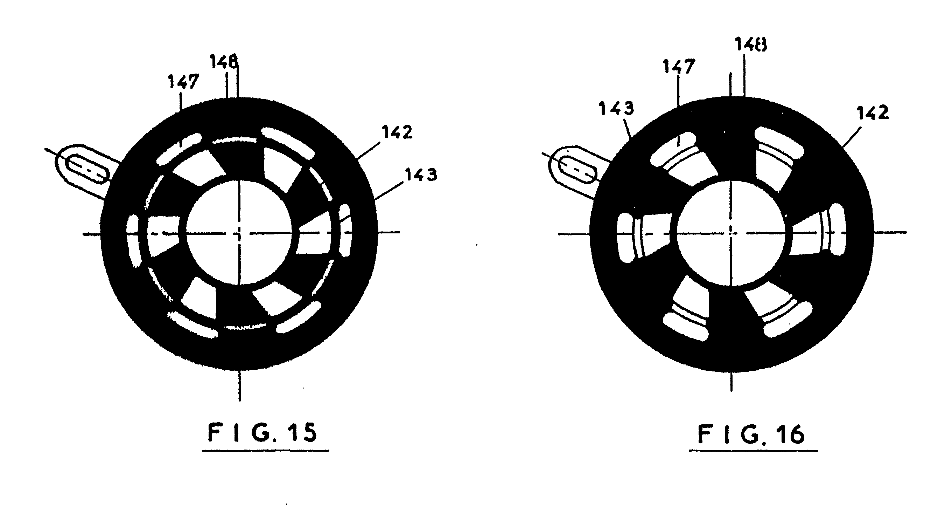

Dans la variante de diaphragme de la figure 15, les premiers, deuxièmes et troisièmes obstacles, respectivement 142, 143 et 148 sont déphasés les uns par rapport aux autres de sorte que les deux vrilles et la chambre de refroidissement 9 sont ouvertes ou fermées simultanément. Dans la variante de la figure 16 par contre, les obstacles sont en phase de sorte qu'au ralenti, la vrille radiale 13 et les orifices de bol 9a, 10 sont alimentés tandis que la vrille axiale 12 est fermée alors qu'au plein gaz la vrille axiale 12 est seule ouverte.

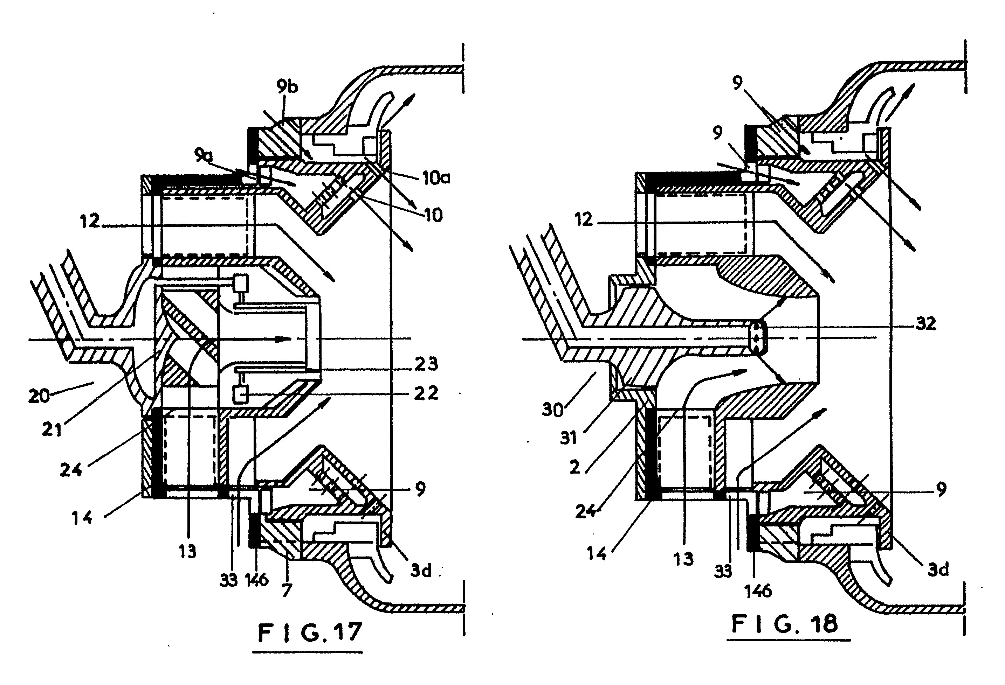

Le mode de réalisation représenté à la figure 17 montre l'application du dispositif selon l'invention à un injecteur 20 à embase 21 pour l'arrivée de carburant sous pression. Dans ce type d'injecteurs, le carburant est projeté par des canaux 22 et un orifice d'injection annulaire 23 entre deux flux d'air, l'un provenant de la vrille interne centrale et l'autre de la vrille externe. Dans cette application, le fourreau central 2 comporte des ouvertures 24 correspondant à chaque passage de la vrille radiale 13 qui, de ce fait, débouchent au centre de l'injecteur 20 et débitent dans l'axe de celui-ci après avoir refroidi l'embase 21. Les passages radiaux 13 du bloc axialo-centripète constituent donc une vrille interne à entrée radiale tandis que les passages axiaux 12 comme précédemment constituent une vrille externe axiale pour le dispositif d'injection.

A la figure 18 a été représentée une variante de ce même mode de réalisation appliquée à un injecteur central 30 de type à rotule 31 permettant son positionnement à l'intérieur du fourreau 2, lequel est également muni des ouvertures radiales 24 précédemment décrites de telle sorte que la vrille radiale 13 débite son flux d'air autour du canal d'injection 30 et que les orifices ponctuels d'injection 32 projettent le carburant à l'intérieur du flux de la vrille interne à entrées radiales 13. L'alimentation axiale en air est effectuée par la vrille axiale 12 et peut être complétée par une alimentation centripète-axiale au moyen d'orifices 33.

Dans les deux cas des figures 17 et 18, le diaphragme 14 est muni d'une collerette radiale 146 percée d'ouvertures 147 permettant l'alimentation de la chambre annulaire 9 de refroidissement par impact.

L'application de l'invention aux deux injecteurs représentés aux figures 17 et 18 présente l'intérêt majeur de permettre une modulation du débit d'air de la vrille interne en fonction des conditions d'utilisation.

De même que dans les modes de réalisation précédents, les diaphragmes des bols représentés aux figures 17 et 18 peuvent comporter soit des obstacles radiaux et axiaux en phase, soit des obstacles déphasés. Toutefois, compte-tenu de la nécessité de conserver dans les conditions de ralenti un certain débit d'air indispensable à la pulvérisation du carburant, la variante comportant des obstacles en phase sera à chaque fois préférée puisqu'elle permet de conserver au ralenti un débit d'air dans la vrille interne à entrée radiale 13.

Dans tous les modes de réalisation représentés, la pulvérisation du carburant peut être complétée par une rangée circulaire d'orifices de bol 10a alimentés en continu en air par des orifices non diaphragmés 9b percés dans l'écrou 7, les orifices 9b permettant également la ventilation de la collerette aval 3d du bol.

En outre, il est bien évident que les deux calages α et β des vrilles axiale et radiale du bloc axialo-centripète du dispositif selon l'invention peuvent être adaptés, en fonction des essais réalisés, de façon à faire varier l'éclatement du jet de carburant en fonction du régime et optimiser selon le cas, soit la qualité de la combustion soit le refroidissement du bol.

En effet, aux conditions de ralenti, on a intérêt à avoir une nappe de carburant très épanouie de manière à obtenir une meilleure stabilité de combustion, ce qui est obtenu au moyen de la vrille radiale qui a une composante tangentielle plus importante et a tendance à faire éclater le jet, ce qui augmente le temps de séjour pour réduire la production d'oxyde de carbone et d'imbrûlés.

Au plein gaz au contraire, la combustion axiale est plus importante et les vitesses de réaction plus rapides et l'utilisation de la vrille axiale permet de réduire le temps de séjour et simultanément l'émission d'oxyde d'azote.

L'invention s'applique donc particulièrement aux chambres de combustion de turbomachine à haut rendement et à faible taux de pollution.

**Revendications**

1. Dispositif d'injection d'air et de carburant dans une chambre de combustion, notamment de turbomachine, comprenant au moins un injecteur de carburant, une vrille de turbulence pour le passage d'air de pulvérisation du carburant, un corps en forme de bol comportant un voile aval divergent dans le sens de l'écoulement et pourvu de trous de bol pour l'injection d'air dans le cône de carburant pulvérisé et une chambre de refroidissement par impact possédant des orifices d'entrée d'air, caractérisé en ce que la vrille possède un nombre pair d'ailettes (11) délimitant un nombre égal de passages d'entrée d'air, en ce qu'un premier passage (12) sur deux est à entrée axiale tandis que d'autres seconds passages (13) intercalés avec les premiers sont à entrée radiale, la sortie d'air vers l'aval des premiers et des seconds passages de la vrille étant axialo-centripète, et en ce qu'il comporte un diaphragme (14) de modulation continue entre les régimes ralenti et plein gaz du débit d'entrée d'air dans la vrille, ledit diaphragme étant constitué par une bague rotative emboîtée sur une portée cylindrique externe de la vrille et comportant d'une part une première partie circulaire plane possédant des premières ouvertures et des premiers obstacles (142) aptes à permettre ou interdire le passage d'air dans les premiers passages (12) à entrée axiale et d'autre part une seconde partie cylindrique possédant des secondes ouvertures et des seconds obstacles (143) aptes à permettre ou interdire le passage d'air dans les seconds passages (13) à entrée radiale.

2. Dispositif d'injection selon la revendication 1, caractérisé en ce que chaque ailette (11) de la vrille de turbulence possède une double inclinaison, d'une part d'un premier angle α par rapport à la génératrice du cylindre enveloppant la vrille et d'autre part d'un second angle β par rapport à un plan longitudinal diamétral de la vrille.

3. Dispositif d'injection selon la revendication 1, caractérisé en ce que les faces des ailettes (11) de la vrille adjacentes aux premiers passages (12) à entrée axiale sont inclinées d'un angle α par rapport à la génératrice du cylindre enveloppant la vrille tandis que les faces opposées de ces mêmes ailettes (11), adjacentes aux seconds passages (13) à entrée radiale, sont inclinées d'un angle β par rapport à un plan longitudinal diamétral de la vrille.

4. Dispositif d'injection selon l'une quelconque des revendications 1 à 3, caractérisé en ce que la partie cylindrique du diaphragme comporte une collerette (146) possédant des troisièmes ouvertures (147) et des troisièmes obstacles aptes à ouvrir ou fermer les orifices (9a) d'entrée d'air de la chambre (9) de refroidissement par impact.

5. Dispositif d'injection selon l'une quelconque des revendications 1 à 4, caractérisé en ce que les premiers et les seconds obstacles (142, 143) du diaphragme (14) sont déphasés entre eux pour ouvrir au fonctionnement pleins gaz, respectivement fermer au ralenti, simultanément les premiers passages axiaux (12) et les seconds passages radiaux (13).

6. Dispositif d'injection selon l'une quelconque des revendications 1 à 4, caractérisé en ce que les premiers et les seconds obstacles (142, 143) sont en phase pour ouvrir au fonctionnement pleins gaz les premiers passages axiaux (12) et fermer les seconds passages radiaux (13) et, au ralenti fermer les premiers passages (12) et ouvrir les seconds passages (13).

7. Dispositif d'injection selon les revendications 4 et 5 ou 4 et 6, caractérisé en ce que les troisièmes obstacles (147) sont en phase avec les deuxièmes obstacles (143) des passages radiaux (13).

8. Dispositif d'injection selon les revendications 4 et 5 ou 4 et 6, caractérisé en ce que les troisièmes obstacles (147) sont déphasés avec les deuxièmes obstacles (143) des passages radiaux (13).

9. Dispositif d'injection selon l'une quelconque des revendications 1 à 8, utilisé en combinaison avec un injecteur central simplifié de carburant, du type à rotule (31) et à orifices ponctuels (32) d'injection du carburant, ou du type à embase refroidie (21) et orifice (23) d'injection annulaire, caractérisé en ce que les premiers passages axiaux (12) constituent une vrille externe pour le dispositif d'injection et en ce que les deuxièmes passages radiaux (13) débouchent dans le fourreau central dans lequel est disposé l'injecteur central pour constituer la vrille de turbulence interne du dispositif d'injection.

## Claims

1. Device for the injection of air and fuel into a combustion chamber, mainly of gas turbines, comprising at least one fuel injector, a swirler for the passage of the atomising air for the fuel, a body in the form of a pot comprising a downstream shell diverging in the direction of the airflow and provided with holes for injecting air into the cone of atomised fuel and a chamber for cooling by impact which has air entry holes, characterised in that the swirler is fitted with an even number of vanes (11) defining an equal number of air inlet passages, in that every other first passage (12) has an axial entry whilst every other second passage (13) alternating with the first passages has a radial entry, the outlet for air towards the rear of both first and second passages of the swirler being axio-centripetal, and in that it comprises a diaphragm (14) for the continuous modulation of the flow of air through the swirler for regimes ranging from slow running to full throttle, the said diaphragm being made up of a rotating ring nesting around an external cylindrical extension to the swirler and comprising on the one hand a flat circular part having the first openings and the first obstructions (142) able to allow or prevent the passage of air into the first entry passages (12) at the axial entry point and on the other hand a second cylindrical part having the second openings and the second obstructions (143) able to allow or prevent the passage of air into the second passages (13) at the radial entry point.

2. Injection device in accordance with Claim 1, characterised in that each vane (11) of the swirler has a double inclination, on the one hand at a first angle α in relation to the generatrix of the cylinder enclosing the swirler and on the other hand at a second angle β in relation to the diametrically longitudinal plane of the swirler.

3. Injection device in accordance with Claim 1, characterised in that the faces of the vanes (11) of the swirler adjacent to the first passages (12) with axial entry are inclined at an angle α in relation to the generatrix of the cylinder enclosing the swirler whilst the opposite faces of the same vanes (11) adjacent to the second passages (13) with radial entry are inclined at an angle β in relation to the diametrically longitudinal plane of the swirler.

4. Injection device in accordance with any of the Claims 1 to 3, characterised in that the cylindrical part of the diaphragm comprises a collar (146) having the third openings and the third obstructions able to open or close off the orifices (9a) for the entry of air to the impact-cooling chamber (9).

5. Injection device in accordance with any of the Claims 1 to 4, characterised in that the first and second obstructions (142, 143) of the diaphragm (14) are out-of-phase in relation to each other so as simultaneously to open under full throttle and respectively to close under slow running conditions the first axial passages (12) and the second radial passages (13).

6. Injection device in accordance with any of the Claims 1 to 4, characterised in that the first and second obstructions (142, 143) are in phase so as at full throttle to open the first axial passages (12) and to close the second radial passages (13) and, under show running conditions, to close the first passages (12) and to open the second passages (13).

7. Injection device in accordance wit the Claims 4 and 5 or 4 and 6, characterised in that the third obstructions (147) are in phase with the second obstructions (143) of the radial passages (13).

8. Injection device in accordance with the Claims 4 and 5 or 4 and 6, characterised in that the third obstructions (147) are out-of-phase with the second obstructions (143) of the radial passages (13).

9. Injection device in accordance with any of the Claims 1 to 8, used in conjunction with a simplified central fuel injector of the ball head type (31) and with individual fuel injection holes (32), or of the cooled-base type (21) and with annular fuel spray (23), characterised in that the first axial passages (12) constitute an external swirler for the fuel injection device and in that the second radial passages (13) open into the central sleeve in which the central injector is placed so as to constitute the internal swirler for the injection device.

## Patentansprüche

1. Vorrichtung zum Einspritzen von Luft und Kraftstoff in eine Brennkammer, insbesondere für Turbomaschinen,
mit wenigstens einer Kraftstoff-Einspritzdüse, mit einem Turbulenzverwirbler für den Luftdurchtritt für die Kraftstoffzerstäubung,
mit einem Körper in Form eines Bolus mit einem stromabwärts angeordneten Mantel, der in Richtung der Strömung divergiert und Bolusöffnungen zum Einspritzen von Luft in den Kegel aus zerstäubtem Kraftstoff und eine Prallkühlkammer mit Lufteintrittsöffnungen aufweist, dadurch gekennzeichnet, daß der Verwirbler eine Anzahl von Flügelpaaren (11) aufweist, die eine gleich große Zahl von Durchgängen für den Lufteintritt begrenzen,
daß ein erster (12) von jeweils zwei Durchgängen für axialen Eintritt ausgebildet ist, während andere zwischen den ersten Durchgängen verschachtelte zweite Durchgänge für radialen Eintritt ausgebildet sind, wobei der Luftaustritt der ersten und der zweiten Durchgänge des Verwirblers in stromabwärtiger Richtung axial-zentripetal ist,
und daß zur kontinuierlichen Modulierung des Durchsatzes der in den Verwirbler eintretenden Luft zwischen Langsambetrieb und Vollgasbetrieb eine Blende (14) vorgesehen ist, die aus einem drehbaren Ring besteht, der auf einer zylindrischen Außenfläche des Verwirblers aufgebracht ist und der einerseits einen ringförmigen ersten ebenen Teil mit ersten Öffnungen und ersten Hindernissen (142) aufweist zur Freigabe oder Unterbindung des Luftdurchtritts in die genannten ersten Durchgänge (12) mit axialem Eintritt und andererseits einen zylindrischen zweiten Teil mit zweiten Öffnungen und zweiten Hindernissen (143) zur Freigabe oder Unterbindung des Luftdurchtritts in die zweiten Durchgänge (13) mit radialem Eintritt.

2. Einspritzvorrichtung nach Anspruch 1, dadurch gekennzeichnet, daß jeder Flügel (11) des Turbulenzverwirblers doppelt geneigt ist und einerseits mit der Erzeugenden des den Verwirbler umschreibenden Zylinders einen ersten Winkel alpha und andererseits mit einer diametralen Längsebene des Verwirblers einen zweiten Winkel beta bildet.

3. Einspritzvorrichtung nach Anspruch 1, dadurch gekennzeichnet, daß die an die ersten Durchgänge (12) mit axialem Eintritt angrenzenden Seiten der Flügel (11) des Verwirblers unter einem Winkel alpha gegenüber der Erzeugenden des den Verwirbler umschreibenden Zylinders geneigt sind, während die entgegengesetzten Seiten derselben Flügel (11), die an die zweiten Durchgänge (13) mit radialem Eintritt angrenzen, mit einer diametralen Längsebene des Verwirblers einen Winkel beta bilden.

4. Einspritzvorrichtung nach einem der Ansprüche 1 bis 3, dadurch gekennzeichnet, daß der zylindrische Teil der Blende einen Kragen (146) mit dritten Öffnungen (147) und dritten Hindernissen aufweist, die die Lufteintrittsöffnungen (9a) der Prallkühlkammer (9) öffnen und schließen können.

5. Einspritzvorrichtung nach einem der Ansprüche 1 bis 4, dadurch gekennzeichnet, daß die ersten und zweiten Hindernisse (142, 143) der Blende (14) gegeneinander phasenversetzt sind, um die ersten axialen Durchgänge (12) und die zweiten radialen Durchgänge (13) im Vollgasbetrieb gleichzeitig zu öffnen bzw. bei Langsamlauf gleichzeitig zu schließen.

6. Einspritzvorrichtung nach einem der Ansprüche 1 bis 4, dadurch gekennzeichnet, daß die ersten und die zweiten Hindernisse (142, 143) phasengleich angeordnet sind, um im Vollgasbetrieb die ersten axialen Durchgänge (12) zu öffnen und die zweiten radialen Durchgänge (13) zu schließen und im Langsamlauf die ersten Durchgänge (12) zu schließen und die zweiten Durchgänge (13) zu öffnen.

7. Einspritzvorrichtung nach den Ansprüchen 4 und 5 oder 4 und 6, dadurch gekennzeichnet, daß die dritten Hindernisse (147) phasengleich mit den zweiten Hindernissen (143) der radialen Durchgänge (13) angeordnet sind.

8. Einspritzvorrichtung nach den Ansprüchen 4 und 5 der 4 und 6, dadurch gekennzeichnet, daß die dritten Hindernisse (147) gegenüber den zweiten Hindernissen (143) der radialen Durchgänge (13) phasenversetzt sind.

9. Einspritzvorrichtung nach einem der Ansprüche 1 bis 8, die in Kombination mit einer vereinfachten zentralen Kraftstoff-Einspritzdüse mit Kniestück (31) und punktuellen Kraftstoff-Einspritzöffnungen (32) oder mit gekühlter Fußplatte (21) und ringförmiger Kraftstoff-Einspritzöffnung (23) eingesetzt wird, dadurch gekennzeichnet, daß die ersten axialen Durchgänge (12) einen externen Verwirbler für die Einspritzvorrichtung bilden und daß die zweiten radialen Durchgänge (13) zur Bildung des internen Turbulenzverwirblers der Einspritzvorrichtung in der zentralen Hülse münden, in der die zentrale Einspritzdüse angeordnet ist.

FIG.1a

EP 0 239 462 B1

F I G . 1

F I G . 2

F I G . 3

FIG. 4

FIG. 4a

FIG. 4b

FIG. 4c

FIG. 5

FIG. 6

402

403

406

500

14

F I G. 7

141

142

143

F I G. 8

142'

143'

F I G. 10

FIG.9c

FIG.9b

FIG.9a

FIG.11a

FIG.11b

FIG.11c

EP 0 239 462 B1

F I G. 12

F I G. 13

F I G. 14

F I G. 15

F I G. 16

EP 0 239 462 B1

F I G. 17

F I G. 18

EP 0 239 462 B1